# EUROPÄISCHE PATENTSCHRIFT

(11) **EP 4 377 647 B1**
(45) Veröffentlichungstag und Bekanntmachung des Hinweises auf die Patenterteilung: **02.07.2025**
(21) Anmeldenummer: 22761251.2
(22) Anmeldetag: 11.08.2022
(51) Int. Cl.: G01K 13/02, G01K 1/16, G01K 3/14

(54) **TEMPERATURMESSVORRICHTUNG ZUR NICHTINVASEN TEMPERATURMESSUNG, TEMPERATURMESSSYSTEM UND COMPUTERPROGRAMMPRODUKT**
TEMPERATURE MEASURING DEVICE FOR NON-INVASIVE TEMPERATURE MEASUREMENT, TEMPERATURE MEASURING SYSTEM, AND COMPUTER PROGRAM PRODUCT
DISPOSITIF DE MESURE DE TEMPÉRATURE POUR MESURE NON INVASIVE DE TEMPÉRATURE, SYSTÈME DE MESURE DE TEMPÉRATURE ET PRODUIT PROGRAMME D'ORDINATEUR

(30) Priorität: 22.10.2021 DE 102021211940
(43) Veröffentlichungstag der Anmeldung: 05.06.2024
(73) Patentinhaber: Siemens Aktiengesellschaft, 80333 München (DE)
(72) Erfinder: BIERWEILER, Thomas, 76297 Stutensee (DE); ENS, Wolfgang, 76351 Linkenheim (DE); HILSENDEGEN, Markus, 76187 Karlsruhe (DE); HUCK, Ralf, 63538 Großkrotzenburg (DE); RIGONI, Valentin, 67590 Wintershouse (FR); SCHERER, Tim, 76185 Karlsruhe (DE); VON DOSKY, Stefan, 76149 Karlsruhe (DE)
(74) Vertreter: Siemens Patent Attorneys
(86) Internationale Anmeldenummer: PCT/EP2022/072580
(87) Internationale Veröffentlichungsnummer: WO 2023/066541

(56) Entgegenhaltungen:
- DE-U1- 202015 103 863
- US-A- 5 064 604
- US-A1- 2015 185 085

## Beschreibung

Die Erfindung betrifft eine Temperaturmessvorrichtung zu einer nichtinvasiven Temperaturmessung. Die Erfindung betrifft auch ein Temperaturmesssystem, das über eine solche Temperaturmessvorrichtung verfügt. Ebenso betrifft die Erfindung ein Computerprogrammprodukt zum Simulieren eines Betriebsverhaltens einer derartigen Temperaturmessvorrichtung.

Die Internationale Patentanmeldung WO 2019/063519 A1 offenbart eine Temperaturmessvorrichtung, die auf einem Rohr montierbar ist. Die Temperaturmessvorrichtung umfasst zwei Temperatursensoren, die mit ihren Messspitzen in unterschiedlichen Radialabständen zu einer Wandung des Rohrs zu montieren sind. Die Messspitzen der Temperatursensoren sind hierbei in einer Isolationsschicht aufgenommen, um durch Wärmeverluste entstehende Fehler zu minimieren.

Aus der Druckschrift WO 2017/131546 A1 ist eine Temperaturmessvorrichtung bekannt, die zwei Temperatursensoren umfasst, die separate Messwerte erzeugen, aus denen die Temperatur eines Mediums in einem Rohr berechenbar ist. Dabei werden thermische Widerstandswerte unterschiedlicher Komponenten berücksichtigt.

Die Patentanmeldung US 2015/0185085 A1 zeigt eine nichtinvasive Temperaturmessvorrichtung, die einen ersten und einen zweiten Temperatursensor umfasst, die in Radialrichtung zueinander beabstandet in einem Halterohr aufgenommen sind. Einer der Temperatursensoren kontaktiert in einem montierten Zustand unmittelbar eine Rohrwandung.

Aus der Gebrauchsmusterschrift DE 20 2015 103 863 U1 ist ein Oberflächentemperaturfühler bekannt, der über einen Adapter an einer Gefäßwand montiert ist. Im Adapter ist ein Sensorgehäuse befestigt, das sich im Wesentlichen in Radialrichtung erstreckt, und in dem ein Sensor angeordnet ist. Zwischen der Gefäßwand und dem Adapter ist eine Wärmeleitpaste eingebracht, die eine thermische Kopplung zwischen der Gefäßwand und dem Adapter gewährleistet.

Nichtinvasive Temperaturmessungen werden in zunehmendem Maß in unterschiedlichen Anwendungsgebieten, wie beispielsweise der Prozessindustrie, eingesetzt. Es wird hierbei eine zunehmende Messgenauigkeit, Zuverlässigkeit und Kosteneffizienz angestrebt. Ebenso wird Montagefreundlichkeit gefordert, um bestehende Anlagen schnell nachrüsten zu können. Der Erfindung liegt die Aufgabenstellung zugrunde, eine Temperaturmessvorrichtung bereitzustellen, die in zumindest einem der beschriebenen Aspekte eine Verbesserung bietet.

Die Aufgabenstellung wird durch eine erfindungsgemäße Temperaturmessvorrichtung gelöst, wie im Anspruch 1 definiert wird. Die Temperaturmessvorrichtung ist zu einem nichtinvasiven Messen einer Temperatur eines Mediums ausgebildet, das sich in einem Rohr befindet. Das Medium kann beispielsweise eine Flüssigkeit, ein Gas, ein Dampf, ein Gemisch hieraus, oder ein Dickstoff sein. Die Richtung, in der sich das Rohr erstreckt, definiert dabei eine Axialrichtung. Die Temperaturmessvorrichtung umfasst einen Sensorhalter, der in einem montierten Zustand an einem Wärmekopplungselement befestigt ist. Das Wärmekopplungselement ist dazu ausgebildet, einen thermisch leitenden Kontakt zu einer Wandung des Rohrs herzustellen. Das Wärmekopplungselement ist selbst zumindest teilweise thermisch leitend ausgebildet und ist dazu geeignet, einen Wärmeleitungspfad zu definieren. Die Temperaturmessvorrichtung weist ferner einen ersten Temperatursensor auf, der dazu ausgebildet ist, eine ersten Temperaturmesswert bereitzustellen. Hierzu ist der erste Temperatursensor mit dem Wärmekopplungselement thermisch leitend verbindbar. Das Wärmekopplungselement ist dazu ausgebildet, einen Wärmeleitungspfad von der Wandung des Rohrs zum ersten Temperatursensor herzustellen. Der Wärmeleitungspfad ist hierbei ein Abschnitt im und/oder am Wärmekopplungselement, entlang dem sich ein Wärmestrom, der von der Wandung des Rohrs in das Wärmekopplungselement fließt, im Wesentlichen ausbreitet. Thermische Verluste, beispielsweise aus dem Wärmekopplungselement an die Umgebung, sind dem Wärmeleitungspfad von der Wandung zum ersten Temperatursensor nicht zuzurechnen. Derartige thermische Verluste können beispielsweise durch eine Isolationsschicht minimiert oder konstant gehalten werden.

Erfindungsgemäß ist das Wärmekopplungselement dazu ausgebildet, den Wärmeleitungspfad von der Wandung zum ersten Temperatursensor einzustellen. Das Einstellen umfasst, dass ein Wärmeleitwiderstand des Wärmeleitungspfads bzw. dessen Wärmeleitfähigkeit baulich durch das Wärmekopplungselement vorgegeben wird.

Erfindungsgemäß ist das Wärmekopplungselement dazu ausgebildet, den Wärmeleitungspfad axial, also bezogen auf die Axialrichtung, umzukehren. Durch das axiale Umkehren erstreckt sich der Wärmeleitungspfad an unterschiedlichen Positionen in im Wesentlichen entgegengesetzten Richtungen. Dazu weist das Wärmekopplungselement zumindest abschnittsweise ein bogenförmiges Profil auf. Unter dem Profil kann hierbei insbesondere eine Form des Wärmekopplungselements aus einer Seitenansicht zu verstehen sein. Das axiale Umlenken erfolgt dadurch, dass sich der Wärmeleitungspfad entlang von Abschnitten des Profils erstreckt, diese also im Wesentlichen entlang einer dortigen konstruktiven Hauptachse, durchläuft. Hierdurch ist es möglich, gegenüber Lösungen aus dem Stand der Technik den Wärmeleitungspfad zwischen der Wandung des Rohrs und dem ersten Temperatursensor zu verlängern. Folglich ist ein entlang des Wärmeleitungspfades vorliegender Wärmeleitwiderstand einstellbar, was eine präzise Messung der Temperatur des Mediums erlaubt. Insbesondere ist der Wärmeleitungspfad in Radialrichtung platzsparend verlängerbar, indem das Wärmekopplungselement in Axialrichtung verlängert ausgebildet ist. Gleichzeitig ist die so erzielte Verlängerung des Wärmeleitungspfads aufgrund des bogenförmigen Profils besonders kompakt erzielbar. Das axiale Umkehren ist hierbei auf eine Axialrichtung bezogen, die durch eine Richtung definiert ist, in die sich das Rohr erstreckt.

In einer Ausführungsform der Erfindung kann das Wärmekopplungselement in Schichtbauweise mit Komponenten aus unterschiedlichen Werkstoffen ausgebildet ist. Dementsprechend weisen die Komponenten, die geschichtet angeordnet sind, insbesondere in eine Radialrichtung, unterschiedliche Wärmeleitfähigkeiten auf und definieren zwischen ihnen paarweise jeweils einen Wärmeübergang. Entlang des Wärmeleitungspfads erfolgt zwischen der Wandung des Rohrs und dem ersten Temperatursensor zumindest ein Wärmeübergang innerhalb des Wärmekopplungselements zwischen dessen in Schichtbauweise angeordneten Komponenten. Dadurch ist insgesamt der Wärmeleitungspfad von der Wandung des Rohrs zumindest zum ersten Temperatursensor in puncto Wärmeleitfähigkeit einstellbar. Eine derart eingestellte Wärmeleitfähigkeit erlaubt ein präzises nichtinvasives Messen der Temperatur des Mediums.

In einer weiteren Ausführungsform der beanspruchten Temperaturmessvorrichtung weist das Wärmekopplungselement ein C-förmiges Profil, ein S-förmiges Profil, ein Z-förmiges Profil oder ein Mäanderprofil auf. Eine C-Form ist in einfacher und kosteneffizienter Weise herstellbar. Ein S-förmiges Profil bietet eine substantielle Verlängerung des Wärmeleitungspfads und ist gleichzeitig besonders kompakt. Ein Z-förmiges Profil bietet eine erhöhte mechanische Stabilität, insbesondere gegen Beanspruchungen in einer Radialrichtung des Rohrs. Ein Mäanderprofil wiederum bietet eine weitere Steigerung bei der Verlängerung des Wärmeleitungspfads. Die beanspruchte Temperaturmessvorrichtung weist ein Wärmekopplungselement auf, das somit in einer Vielzahl von Varianten herstellbar ist und dabei die technischen Vorzüge der Erfindung bietet. Die beanspruchte Temperaturmessvorrichtung ist daher an eine breite Spanne an Einsatzzwecken in einfacher Weise anpassbar.

Darüber hinaus kann die Temperaturmessvorrichtung über einen zweiten Temperatursensor verfügen, der dazu ausgebildet ist, einen zweiten Temperaturmesswert bereitzustellen. Der zweite Temperatursensor ist wie der erste Temperatursensor thermisch leitend mit dem Wärmekopplungselement verbindbar. Hierdurch stellt sich im montierten Zustand im Wärmekopplungselement auch ein Wärmeleitungspfad von der Wandung des Rohrs um zweiten Temperatursensor ein. Es liegt dadurch auch zwischen den ersten Temperatursensor und dem zweiten Temperatursensor ein Wärmeleitungspfad vor, der im Wesentlichen durch das Wärmekopplungselement verläuft. Der erste und zweite Temperatursensor sind zueinander beabstandet montierbar. Dadurch ist zwischen diesen ein verlängerter Wärmleitungspfad mit einem definierten Wärmeleitwiderstand ausbildbar. Insbesondere kann der Wärmeleitwiderstand zu einem beschleunigten Ansprechen der Temperaturmessvorrichtung auf eine Änderung der Temperatur des Mediums ausgebildet sein. Ebenso kann das Wärmekopplungselement zu einem Minimieren eines Überschwingens beim nichtinvasiven Messen der Temperatur in Medium ausgebildet sein. Der durch das Wärmekopplungselement definierte Wärmeleitwiderstand wirkt hierbei, in einer mechanischen Analogbetrachtung, als Widerstands- und Dämpfungselement. Durch ein gemeinsames Verarbeiten des ersten Temperaturmesswerts vom ersten Temperatursensor und des zweiten Temperaturmesswerts vom zweiten Temperatursensor ist die Temperatur des Mediums mit erhöhter Genauigkeit ermittelbar.

Ferner kann der erste Temperatursensor zu einem Erfassen des ersten Temperaturmesswerts in einem ersten Axialabschnitt des Wärmekopplungselements angeordnet sein. Korrespondierend kann der zweite Temperatursensor zu einem Erfassen des zweiten Temperaturmesswerts in einem zweiten Axialabschnitt des Wärmekopplungselements angeordnet sein. Der erste bzw. zweite Axialabschnitt sind hierbei Abschnitte des Wärmekopplungselements, die sich jeweils im Wesentlichen in Axialrichtung, also entlang des Rohrs, erstrecken. Im ersten bzw. zweiten Axialabschnitt verläuft der Wärmeleitungspfad im Wesentlichen im Axialrichtung, also parallel zum Rohr. Der erste und der zweite Axialabschnitt können in Radialrichtung zueinander beabstandet ausgebildet sein. Der erste und zweite Axialabschnitt des Wärmekopplungselements können zum zumindest abschnittweise bogenförmigen Profil gehören. Hierdurch erreicht der Wärmestrom entlang des Wärmeleitungspfads zuerst den zweiten Temperatursensor und danach den ersten Temperatursensor. Zwischen dem ersten und zweiten Temperatursensor liegt damit ein definierter Wärmeleitwiderstand vor, der eine präzise Messung der Temperatur des Mediums erlaubt. Die beanspruchte Temperaturmessvorrichtung kann auch einen dritten Temperatursensor aufweisen. Die Funktionsweise des ersten und zweiten Temperatursensors ist dadurch vervielfältigbar und so die skizzierten technischen Vorteile in erhöhten Umfang erzielbar.

In einer weiteren Ausführungsform der beanspruchten Temperaturmessvorrichtung kann das Wärmekopplungselement zumindest teilweise aus einem Werkstoff hergestellt sein, der betragsmäßig einen temperaturbezogenen Wärmeleitfähigkeitsgradienten von bis zu 0,025 (W/(m*K))/°C aufweist. Je höher der Wärmeleitfähigkeitsgradient betragsmäßig ist, umso empfindlicher ist die Messung der Temperatur des Mediums. Umgekehrt bietet ein betragsmäßig geringer temperaturbezogener Wärmeleitfähigkeitsgradient eine einfache und gleichzeitig präzise Messung über eine breite Temperaturspanne. Ein derartiger temperaturbezogener Wärmeleitfähigkeitsgradient kann hierbei beispielsweise in einem Bereich von 0° C bis 1200° C für den ersten und/oder zweiten Temperaturmesswert vorliegen. Die beanspruchte Temperaturmessvorrichtung erzielt so eine weiter gesteigerte Messgenauigkeit.

Weiter kann bei der beanspruchten Temperaturmessvorrichtung das Wärmekopplungselement aus einem Edelstahl hergestellt sein. Edelstahl bietet, für einen metallischen Werkstoff, eine relativ niedrige Wärmeleitfähigkeit. Dementsprechend ergibt für den Wärmeleitungspfad zu ersten bzw. zweiten Temperatursensor jeweils ein erhöhter Wärmeleitwiderstand. Analog ergibt sich auch ein zwischen dem ersten und zweiten Temperatursensor ein erhöhter Wärmeleitwiderstand. In Kombination mit dem temperaturbezogenen Wärmeleitungsgradienten von Edelstahl ergibt sich eine erhöhte Messgenauigkeit für den ersten bzw. zweiten Temperaturmesswert. Die beanspruchte Temperaturmessvorrichtung bietet somit ein breites mögliches Einsatzspektrum. Darüber hinaus bietet Edelstahl eine gesteigerte Korrosionsbeständigkeit und Hitzebeständigkeit, so dass die beanspruchten Temperaturmessvorrichtung auch für Anwendungen mit anspruchsvollen Umgebungsbedingungen hinreichend robust und langlebig ist.

Ferner kann eine dem Rohr zugewandte Seite des Wärmekopplungselements als Schwalbenschwanz ausgebildet sein. Die dem Rohr zugewandte Seite weist dabei in einem mittigen Bereich eine Vertiefung auf, so dass das Wärmekopplungselement im montierten Zustand im Wesentlichen auf zwei seitlichen Stützabschnitten auf dem Rohr aufsitzt, die sich im Wesentlichen in Axialrichtung erstrecken. Die Vertiefung weist dazu beispielsweise ein trapezförmiges oder trapezoidförmiges Profil auf. Dadurch umfasst der thermisch leitende Kontakt zwischen der Wandung des Rohrs und dem Wärmekopplungselement im Wesentlichen zwei Linienkontakte. Dadurch ist über unterschiedliche Rohrdurchmesser ein im Wesentlichen gleichbleibender thermisch leitender Kontakt zwischen der Wandung und dem Wärmekopplungselement gegeben. Hierdurch bietet die beanspruchte Temperaturmessvorrichtung auch bei unterschiedlichen Rohrdurchmessern eine exakte nichtinvasive Temperaturmessung.

Des Weiteren kann das Wärmekopplungselement in einem dem Rohr zugewandten Bereich zumindest eine Ausnehmung ausgebildet sein. Die Ausnehmung ist zu einem Durchführen eines Befestigungsmittels, beispielsweise eines Bandes, einer Kette oder einer Schelle, geeignet. Das Befestigungsmittel ist hierdurch nahe an der Wandung des Rohrs durch das Wärmekopplungselements durchführbar, was eine vereinfachte Montage erlaubt, bei der einem Kippen des Wärmekopplungselements entgegengewirkt wird. Insbesondere wird die Temperaturmessvorrichtung bei der Montage dadurch stabilisiert. Infolgedessen ist die beanspruchte Temperaturmessvorrichtung in einfacher Weise auch in reduziertem Bauraum schnell montierbar. Die zumindest eine Ausnehmung ist beispielsweise in einem radial inneren Axialabschnitt des Wärmekopplungselements ausgebildet, das auch unmittelbar die Wandung des Rohrs kontaktiert. Ferner wird durch die Ausnehmung ein Volumen des Wärmekopplungselements reduziert, was wiederum ein Ansprechen der Temperaturmessvorrichtung beschleunigt.

Darüber hinaus kann die beanspruchte Temperaturmessvorrichtung einen Endaxialabschnitt aufweisen, der entlang des Wärmeleitungspfads stromab des ersten und/oder zweiten Temperatursensors positioniert ist. Der Endaxialabschnitt kann als dabei Teil des ersten, zweiten, dritten, usw. Axialabschnitts ausgebildet sein. Durch den Endaxialabschnitt ist gewährleistet, dass der Wärmeleitungspfad im Wesentlichen störungsfrei den ersten bzw. zweiten Temperatursensor passiert. Die Wirkung von Randeffekten des Wärmeleitungspfads, beispielsweise das Ausbilden eines Hitze-Endes, an dem der entlang des Wärmeleitungspfads transportierte Wärmestrom durch Konvektion an die Umgebung abgegeben wird, wird im Bereich des ersten bzw. zweiten Temperatursensors verringert. Je weiter sich der Endaxialabschnitt vom ersten bzw. zweiten Temperatursensor befindet, umso stärker werden Randeffekte minimiert. Infolgedessen ist in einfacher Weise eine präzise Messung der Temperatur des Mediums verwirklichbar.

In der beanspruchten Temperaturmessvorrichtung können ferner der erste und/oder zweite Temperatursensor in einer Radialrichtung des Rohrs montierbar ausgebildet sein. Dazu können der erste bzw. zweite Sensor im Wesentlichen stabförmig ausgebildet sein, beispielsweise als Widerstandsthermometer. Der erste und/oder zweite Temperatursensor können einen ersten bzw. zweiten Messaufnehmer aufweisen, der an einem dem Rohr zugewandten Bereich, insbesondere an einem dem Rohr zugewandten Ende des jeweiligen Temperatursensors, angebracht sein. Der erste bzw. zweite Messaufnehmer stellt hierbei die Stelle des jeweiligen Temperatursensors dar, die in unmittelbaren thermischen Kontakt mit dem Wärmekopplungselement steht. Der erste und/oder zweite Temperatursensor können ferner durch Bohrungen im Wärmekopplungselement montiert werden. Hierdurch sind eine stabile Montage, eine einfache Entnahme zur Rekalibrierung und ein einfacher Austausch der Temperatursensoren möglich. Vorzugsweise sind der erste und/oder zweite Temperatursensor als jeweils als Dünnfilmwiderstand ausgebildet, der eine vorteilhafte thermische Anbindung an das Wärmekopplungselement bietet.

Alternativ können der erste und/oder zweite Temperatursensor in einer Axialrichtung des Rohrs montiert sein. Dazu kann in einem der Axialabschnitte des Wärmekopplungselements eine Bohrung, insbesondere eine Sackbohrung, ausgebildet sein, die im Wesentlichen parallel zur Rohrachse verläuft. Beispielsweise kann der erste Temperatursensor in einem ersten Axialabschnitt zumindest teilweise aufgenommen sein und der zweite Temperatursensor kann in einem zweiten Axialabschnitt zumindest teilweise aufgenommen sein. Dadurch, dass der Wärmeleitwiderstand entlang des Wärmeleitungspfads durch den ersten und zweiten Axialabschnitt infolge des zumindest abschnittsweise bogenförmigen Profils des Wärmekoppelelements verlängert ist, ist auch bei einem derartigen Aufbau eine erhöhte Messgenauigkeit gegeben. Durch das erfindungsgemäße Wärmekopplungselement sind folglich in Radialrichtung besonders kompakte Temperaturmessvorrichtungen umsetzbar.

Die zugrundeliegende Aufgabenstellung wird auch durch ein erfindungsgemäßes Temperaturmesssystem gelöst. Das Temperaturmesssystem ist zu einem Messen einer Temperatur eines Mediums in einem Rohr ausgebildet und weist eine Temperaturmessvorrichtung auf, die mit einer Auswertungseinheit verbunden ist. Die Auswertungseinheit ist dazu ausgebildet, zumindest einen Temperaturmesswert von der Temperaturmessvorrichtung zu empfangen und auszuwerten. Die Auswertungseinheit kann in einem Gehäuse aufgenommen sein, das am Sensorhalter befestigt ist. Alternativ oder ergänzend kann die Auswertungseinheit auch separat ausgebildet sein und über eine kommunikative Datenverbindung mit der Temperaturmessvorrichtung verbunden sein. Insbesondere kann die Auswertungseinheit zumindest funktionell in einer Industriesteuerung, einem Leitrechner und/oder einer Computer-Cloud verwirklicht sein. Erfindungsgemäß ist die Temperaturmessvorrichtung gemäß einer der oben skizzierten Ausführungsformen ausgebildet. Dadurch sind die technischen Vorzüge der Temperaturmessvorrichtung auf das Temperaturmesssystem übertragbar.

Gleichermaßen wird die eingangs beschriebene Aufgabe durch ein erfindungsgemäßes Computerprogrammprodukt gelöst. Das erfindungsgemäße Computerprogrammprodukt ist dazu eingerichtet, das Betriebsverhalten einer Temperaturmessvorrichtung zu simulieren. Hierzu kann das Computerprogrammprodukt Befehle umfassen, die bei einem Ausführen das Betriebsverhalten der Temperaturmessvorrichtung zu simulieren.

Insbesondere kann das Computerprogrammprodukt dazu eingerichtet sein, das Betriebsverhalten der Temperaturmessvorrichtung zu simulieren, indem dessen Aufbau darin fest vorgegeben ist, also ein Abbild dessen hinterlegt ist. Alternativ kann das Betriebsverhalten auch durch ein abstrahiertes Rechenmodell dargestellt werden, das vom räumlichen Aufbau der Temperaturmessvorrichtung unabhängig ist. Weiter alternativ kann das Betriebsverhalten auch anhand einer Kombination hieraus ermittelt werden. Die zu simulierende Temperaturmessvorrichtung ist erfindungsgemäß nach einer der oben beschriebenen Ausführungsformen ausgebildet. Das Computerprogrammprodukt kann zur Simulation über ein Physik-Modul verfügen, in dem die Temperaturmessvorrichtung abgebildet ist und beispielsweise ihr elektrisches oder signaltechnisches Verhalten unter einstellbaren Betriebsbedingungen nachstellbar ist. Beispielsweise gehören zu den einstellbaren Betriebsbedingungen ein Durchfluss im Querschnitt des Rohrs, eine Temperatur, ein Druck, eine Viskosität des Mediums im Rohr, ein Wärmeübergangsverhalten einer Wandung des Rohrs, ein Wärmeleitungsverhalten eines Wärmekopplungselements, und/oder ein Konvektionsverhalten. Hierzu kann das Computerprogrammprodukt über eine Datenschnittstelle verfügen, über die entsprechende Daten über eine Benutzereingabe und/oder andere simulationsgerichtete Computerprogrammprodukte vorgebbar sind. Das Computerprogrammprodukt kann auch über eine Datenschnittstelle zum Ausgeben von Simulationsresultaten an einen Benutzer und/oder andere simulationsgerichtete Computerprogrammprodukte verfügen. Mittels des Computerprogrammprodukts sind beispielsweise Temperaturmesswerte von Temperatursensoren der Temperaturmessvorrichtung, oder andere Sensorwerte einer Anlage, in der die Temperaturmessvorrichtung einzusetzen ist, auf Plausibilität prüfbar. Dadurch kann unter anderem ein defekter Sensor, insbesondere ein Temperatursensor der Temperaturmessvorrichtung, identifiziert werden. Die Erfindung beruht unter anderem auch auf der überraschenden Erkenntnis, dass die oben skizzierten Verfahren bei relativ geringem Rechenaufwand mit gesteigerter Präzision modellierbar sind, beispielsweise das Wärmeleitungsverhalten im Wärmekopplungselement. Dementsprechend wird durch das erfindungsgemäße Computerprogrammprodukt eine umfangreiche und gleichzeitig rechenkapazitätenschonende Möglichkeit zum Überwachen und/oder Erproben einer entsprechenden Temperaturmessvorrichtung zur Verfügung gestellt. Das Computerprogrammprodukt ist als sogenannter Digitaler Zwilling ausgebildet, wie beispielsweise in der Druckschrift US 2017/286572 A1 näher beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Insbesondere kann das Computerprogrammprodukt in einer Computer-Cloud ausführbar ausgebildet sein. Ferner kann durch das erfindungsgemäße Computerprogrammprodukt eine Temperaturmessvorrichtung per Simulation erprobt und/oder optimiert werden, beispielsweise bei einer geplanten Nachrüstung in einer Anlage.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Aufbau einer ersten Ausführungsform der beanspruchten Temperaturmessvorrichtung in einer teilweise geschnittenen Seitenansicht;
- FIG 2: eine Detailansicht eines Wärmekopplungselements der ersten Ausführungsform der beanspruchten Temperaturmessvorrichtung;
- FIG 3: eine zweite Ausführungsform der beanspruchten Temperaturmessvorrichtung in einer Detailansicht im Querschnitt.

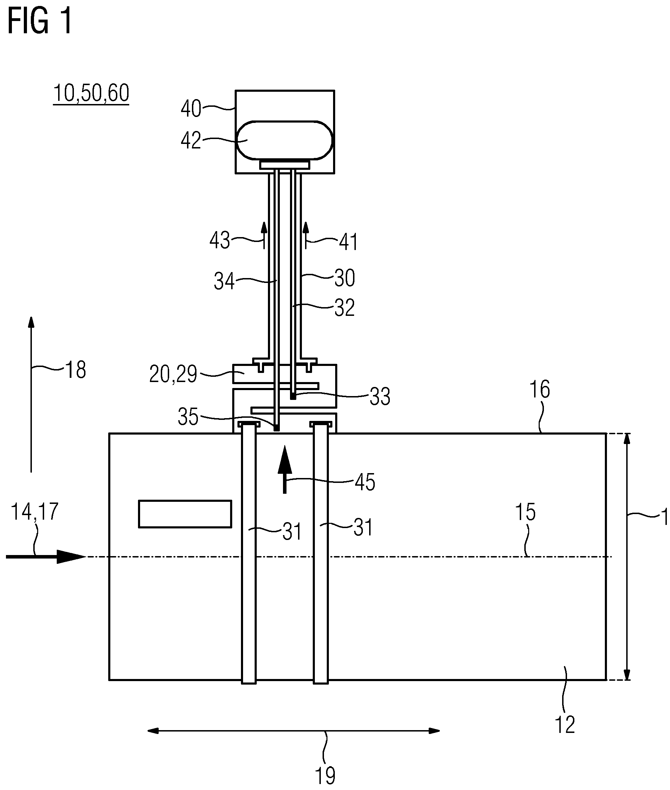

Ein schematischer Aufbau einer ersten Ausführungsform der beanspruchten Temperaturmessvorrichtung 10 ist in FIG 1 teilweise geschnitten in einer Seitenansicht dargestellt. Die Temperaturmessvorrichtung 10 ist auf einem Rohr 12 montiert das einen Durchmesser 13 aufweist und in dem sich ein Medium 14 befindet. Das Rohr 12 erstreckt sich entlang einer Rohrachse 15, durch die auch eine Axialrichtung 19 definiert ist. Senkrecht zur Axialrichtung 19 ist eine Radialrichtung 18 definiert. Die Temperatur 17 des Mediums 14 ist durch die Temperaturmessvorrichtung 10 zu erfassen. Die Temperaturmessvorrichtung 10 weist ein Wärmekopplungselement 20 auf, das durch Befestigungsmittel 31 an einer Wandung 16 des Rohrs 12 lösbar befestigt ist. Die Befestigungsmittel 31 sind hierbei als Schellen ausgebildet. Am Wärmekopplungselement 20 ist eine Sensorhalterung 30 angebracht, in der ein erster und ein zweiter Temperatursensor 32, 34 aufgenommen sind. Der erste und zweite Temperatursensor 32, 34 sind als im Wesentlichen stabförmige Widerstandsthermometer ausgebildet, an deren Ende sich jeweils ein Messaufnehmer 33, 35 befindet. Durch den ersten Messaufnehmer 33 ist der erste Temperatursensor 32 dazu ausgebildet, an einer Stelle im Wärmekopplungselement 20 eine Temperatur zu erfassen und der zweite Temperatursensor 34 durch den zweiten Messaufnehmer 35 an einer anderen Stelle im Wärmekopplungselement 20. Ferner ist an der Sensorhalterung 30 ein Gehäuse 40 angeordnet, in dem eine Auswertungseinheit 42 aufgenommen ist. Das Gehäuse 40 mit der Auswertungseinheit 42 bildet mit der Temperaturmessvorrichtung 10 ein Temperaturmesssystem 50. Die Auswertungseinheit 42 ist mit dem ersten und zweiten Temperatursensor 32, 34 gekoppelt und dazu ausgebildet, von diesen einen ersten Temperaturmesswert 41 bzw. einen zweiten Temperaturmesswert 43 zu empfangen und zur Ermittlung der Temperatur 17 des Mediums 14 zu verarbeiten und auszuwerten. Der erste Temperaturmesswert 41 entspricht hierbei der Temperatur am ersten Messaufnehmer 33 und der zweite Temperaturmesswert 43 der Temperatur am zweiten Messaufnehmer 35.

Durch die im Medium 14 vorliegende Temperatur 17 wird ein Wärmestrom 45 aus der Wandung 16 des Rohrs 12 in das Wärmekopplungselement 20 hervorgerufen. Durch den Wärmestrom 45 sind mittels des ersten und zweiten Temperatursensors 32, 34 Temperaturmesswerte 41, 43 erfassbar, die voneinander abweichen. Basierend auf den unterschiedlichen Temperaturmesswerten 41, 43 ist die Temperatur 17 des Mediums 14 ermittelbar. Das Wärmekopplungselement 20 weist ein im Wesentlichen Z-förmiges oder S-förmiges Profil 29 auf, durch das der Wärmestrom 45 durch das Wärmekopplungselement 20 gelenkt wird. Durch das Z-förmige bzw. S-förmige Profil 29 wird eine gesteigerte Messgenauigkeit bei der Ermittlung der Temperatur 17 des Mediums 14 verwirklicht. Das Betriebsverhalten der Temperaturmessvorrichtung 10 ist durch ein Computerprogrammprodukt 60 simulierbar, das im Wesentlichen als Digitaler Zwilling der Temperaturmessvorrichtung 10 ausgebildet ist.

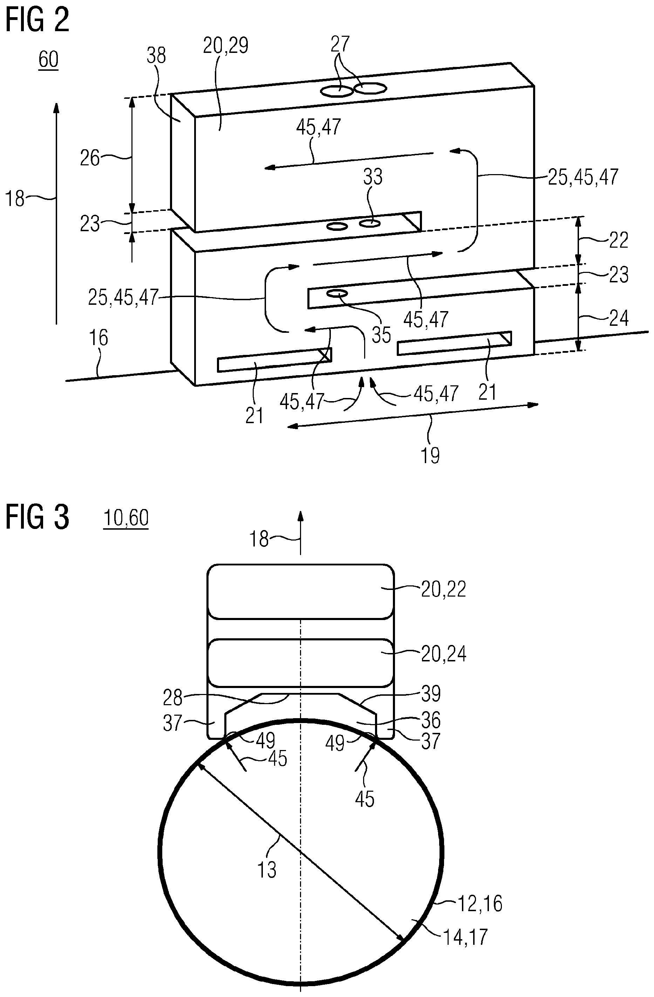

Das Wärmekopplungselement 20 aus der Ausführungsform nach FIG 1 ist in FIG 2 detailliert abgebildet. Das Wärmekopplungselement 20 ist auf einer Wandung 16 des Rohrs 12 positioniert, so dass ein Wärmestrom 45 von der Wandung 16 in das Wärmekopplungselement 20 erfolgt. Der Wärmestrom 45 tritt von der Wandung 16 in einen zweiten Axialabschnitt 24 des Wärmekopplungselements 20 ein, der in thermisch leitendem Kontakt mit der Wandung 16 steht. Im zweiten Axialabschnitt 24 sind Ausnehmungen 21 ausgebildet, die zu einer Durchführung der Befestigungsmittel 31, wie in FIG 1 gezeigt, geeignet sind. Der zweite Axialabschnitt 24 geht in Radialrichtung 18 in einen ersten Axialabschnitt 22 über. Der erste und der zweite Axialabschnitt 22, 24 sind durch einen abgesetzten Trennspalt 23 voneinander getrennt. Analog dazu ist zwischen dem ersten Axialabschnitt 22 und einem dritten Axialabschnitt 26 ein Übergang ausgebildet, wobei der erste Axialabschnitt 22 vom dritten Axialabschnitt 26 ebenfalls durch einen abgesetzten Trennspalt 23 getrennt ist. Hierdurch ist ein im Wesentlichen Z-förmiges bzw. S-förmiges Profil 29 des Wärmekopplungselements 20 ausgebildet. Dem Wärmestrom 45 wird dadurch im zweiten Axialabschnitt 24 ein im Wesentlichen axialer Wärmeleitungspfad 47 aufgeprägt. Beim Übergang vom zweiten Axialabschnitt 24 in den ersten Axialabschnitt 22 wiederum wird der Wärmestrom 45, und damit auch der Wärmeleitungspfad 47, umgelenkt. Der Übergang zwischen dem ersten und dem zweiten Axialabschnitt 22, 24 bildet eine Bogenform aus, der der Wärmeleitungspfad 47 folgt. Im ersten Axialabschnitt 22 erstreckt sich der Wärmeleitungspfad 47 im Wesentlichen in Axialrichtung 19. Die Richtung des Wärmeleitungspfads 47, in FIG 2 durch Pfeile versinnbildlicht, ist im ersten Axialabschnitt 22 der im zweiten Axialabschnitt 24 entgegengesetzt. Dementsprechend erfolgt zwischen dem ersten und zweiten Axialabschnitt 22, 24 eine Umkehr 25 des Wärmeleitungspfads 47. In analoger Weise erfolgt auch eine Umkehr 25 des Wärmeleitungspfads 47 bei einem Übergang vom ersten Axialabschnitt 22 in den dritten Axialabschnitt 26. Der Wärmestrom 45 entfernt sich entlang des Wärmeleitungspfads 47 in Radialrichtung 18 von der Wandung 18, erstreckt sich dabei jedoch in alternierender Axialrichtung 19. Infolgedessen ist der Wärmeleitungspfad 47 durch das Profil 29 des Wärmekopplungselements 20 verlängert. Die Trennspalte 23 sind mit einem Isolator, insbesondere Luft, gefüllt, so dass eine Wärmeübertragung per Konvektion vom zweiten Axialabschnitt 24 in den ersten Axialabschnitt 22 oder vom ersten Axialabschnitt 22 in den dritten Axialabschnitt 26 im Wesentlichen vernachlässigbar ist.

Im Wärmekopplungselement 20 sind Bohrungen 27 ausgebildet, die sich im Wesentlichen in Radialrichtung 18 erstrecken. In den Bohrungen 27 sind jeweils der erste bzw. zweite Temperatursensor 32, 34 aufnehmbar, wie in FIG 1 abgebildet. Die Bohrung 27, die zum Aufnehmen des ersten Temperatursensor 32 vorgesehen ist, endet als Sackbohrung im ersten Axialabschnitt 22. Der erste Messaufnehmer 33 am ersten Temperatursensor 32 steht im montierten Zustand folglich mit dem ersten Axialabschnitt 22 des Wärmekopplungselements 20 in thermisch leitendem Kontakt. Die Bohrung 27, die zum Aufnehmen des zweiten Temperatursensors 34 vorgesehen ist, endet als Sackbohrung im zweiten Axialabschnitt 24. Der zweite Messaufnehmer 35 am zweiten Temperatursensor 34 steht im montierten Zustand mit dem zweiten Axialabschnitt 24 in thermisch leitenden Kontakt. Der Wärmestrom 45, der den zweiten Messaufnehmer 35 erreicht, erreicht deshalb auch den ersten Messaufnehmer 33. Das Wärmekopplungselement 20 ist aus einem Edelstahl hergestellt. Infolge des Profils 29 des Wärmekopplungselements 20 liegt zwischen dem ersten Messaufnehmer 33, also dem ersten Temperatursensor 32, und dem zweiten Messaufnehmer 35, also dem zweiten Temperatursensor 34, ein definierter Wärmeleitungspfad 47 vor. Hierdurch ist die Temperatur 17 des Mediums 14, wie in FIG 1 abgebildet, mit gesteigerter Präzision ermittelbar. Durch die Umlenkung 25 vom ersten Axialabschnitt 22 in den dritten Axialabschnitt 26 wird der Wärmestrom 45, und damit der Wärmeleitungspfad 47, weiter in Axialrichtung 19 gelenkt. Randeffekte des Wärmeleitungspfads 47 liegen dadurch in einem Bereich eines Endaxialabschnitts 38 des dritten Axialabschnitts 26 vor. Auch dadurch wird im ein definierter Wärmeleitungspfad 47 im Bereich des ersten Messaufnehmers 33 gewährleistet. Das in FIG 2 dargestellte Wärmekopplungselement 20 ist in seinem Betriebsverhalten, zu dem die Ausbreitung des Wärmestroms 45, und damit die Form des Wärmeleitungspfads 47, gehört, ist in seinem Betriebsverhalten in einem Computerprogrammprodukt 60 simulierbar. Das Computerprogrammprodukt 60 ist dazu im Wesentlichen als Digitaler Zwilling der Temperaturmessvorrichtung 10 ausgebildet, das das Wärmekopplungselement 20 nach FIG 2 umfasst.

Ein Wärmekopplungselement 20 gemäß einer zweiten Ausführungsform der Erfindung ist in FIG 3 in einem Querschnitt abgebildet. Das Wärmekopplungselement 20 gehört zu einer Temperaturmessvorrichtung 10, die auf einer Wandung 16 eines Rohrs 12 montiert ist. Das Rohr 12 ist mit einem Medium 14 gefüllt, dessen Temperatur 17 mit der Temperaturmessvorrichtung 10 zu erfassen ist. Das Wärmekopplungselement 20 weist in einem zweiten Axialabschnitt 24 auf ein einer dem Rohr 12 zugewandten Seite 28 eine im Wesentlichen mittige Vertiefung 28 auf. Durch die Vertiefung 28 sind zwei Stützabschnitte 37 gebildet, über die das Wärmekopplungselement 20 an der Wandung 16 abgestützt ist. Über die Stützabschnitte 37 wird jeweils ein thermisch leitender Kontakt zwischen dem Wärmekopplungselement 20 und der Wandung 16 hergestellt. Die Stützabschnitte 37 bilden den thermisch leitenden Kontakt mit der Wandung 16 jeweils über einen Linienkontakt 49 aus. Ein Wärmestrom 45 aus der Wandung 16 in das Wärmekopplungselement 20 erfolgt somit über die Linienkontakte 49. Dadurch ist auch bei unterschiedlichen Rohrdurchmessern 13 eine im Wesentlichen konstante Kontaktfläche gegeben. Des Weiteren ist das Wärmekopplungselement 20 über die im Wesentlichen mittige Vertiefung 36 in einfacher Weise an Rohre 12 mit unterschiedlichen Durchmessern 13 montierbar. Durch die Vertiefung 36 ist die dem Rohr 12 zugewandte Seite 28 als Schwalbenschwanz 39 ausgebildet. Dazu weist die Vertiefung 36 ein im Wesentlichen trapezförmiges oder trapezoidförmiges Profil auf. Die beanspruchte Temperaturmessvorrichtung 10 ist dadurch schnell an unterschiedlichen Rohren 12 im Zuge einer Nachrüstung anbringbar. Bei einer Wiedermontage des Wärmekopplungselements 20 an der Wandung 16 sind die thermischen Auswirkungen eines Versatzes des Wärmekopplungselements 20 gegenüber seiner vorherigen Position minimiert. Insbesondere ist das Wärmekopplungselement 20 ohne Neukalibrierung wiedermontierbar. Das Betriebsverhalten der Temperaturmessvorrichtung 10, zu dem auch der Wärmestrom 45 aus der Wandung 16 in das Wärmekopplungselement 20 gehört, ist über ein nicht näher gezeigtes Computerprogrammprodukt 60 simulierbar, das im Wesentlichen als Digitaler Zwilling der Temperaturmessvorrichtung 10 ausgebildet ist.

## Patentansprüche

1. Temperaturmessvorrichtung (10) zum nichtinvasiven Messen einer Temperatur (17) eines Mediums (14) in einem Rohr (12), umfassend einen ersten Temperatursensor (32), einen Sensorhalter (30) und ein Wärmekopplungselement (20), das zu einem Herstellen eines Wärmeleitungspfads (47) von einer Wandung (16) des Rohrs (12) zum ersten Temperatursensor (32) ausgebildet ist, der dazu ausgebildet ist, einen ersten Temperaturmesswert (41) bereitzustellen, **dadurch gekennzeichnet, dass** das Wärmekopplungselement (20) zu einem Einstellen des Wärmeleitungspfads (47) zu einem axialen Umkehren des Wärmeleitungspfads (47) zumindest abschnittsweise ein bogenförmiges Profil (29) aufweist, wobei das axiale Umkehren auf eine Axialrichtung (19) bezogen ist, die durch eine Richtung definiert ist, in die sich das Rohr (12) erstreckt.

2. Temperaturmessvorrichtung (10) nach Anspruch 1, **dadurch gekennzeichnet, dass** das Wärmekopplungselement (20) zum Einstellen des Wärmeleitungspfads (47) in Schichtbauweise mit Komponenten aus unterschiedlichen Werkstoffen ausgebildet ist.

3. Temperaturmessvorrichtung (10) nach Anspruch 1 oder 2, **dadurch gekennzeichnet, dass** das Wärmekopplungselement (20) ein C-förmiges Profil, ein S-förmiges Profil, ein Z-förmiges Profil oder ein Mäanderprofil aufweist.

4. Temperaturmessvorrichtung (10) nach einem der Ansprüche 1 bis 3, **dadurch gekennzeichnet, dass** die Temperaturmessvorrichtung (10) einen zweiten Temperatursensor (34) aufweist.

5. Temperaturmessvorrichtung (10) nach Anspruch 4, **dadurch gekennzeichnet, dass** der erste Temperatursensor (32) zu einem Erfassen des ersten Temperaturmesswerts (41) in einem ersten Axialabschnitt (22) des Wärmekopplungselements (20) angeordnet ist und der zweite Temperatursensor (34) zu einem Erfassen eines zweiten Temperaturmesswerts (43) in einem zweiten Axialabschnitt (24) des Wärmekopplungselements (20).

6. Temperaturmessvorrichtung (10) nach einem der Ansprüche 1 bis 5, **dadurch gekennzeichnet, dass** das Wärmekopplungselement (20) zumindest teilweise aus einem Werkstoff hergestellt ist, der betragsmäßig einen temperaturbezogenen Wärmeleitfähigkeitsgradienten von bis zu 0,025 (W/(m*K))/°C aufweist.

7. Temperaturmessvorrichtung (10) nach Anspruch 6, **dadurch gekennzeichnet, dass** der Werkstoff ein Edelstahl ist.

8. Temperaturmessvorrichtung (10) nach einem der Ansprüche 1 bis 7, **dadurch gekennzeichnet, dass** eine dem Rohr (12) zugewandte Seite (28) des Wärmekopplungselements (20) als Schwalbenschwanz ausgebildet ist.

9. Temperaturmessvorrichtung (10) nach einem der Ansprüche 1 bis 8, **dadurch gekennzeichnet, dass** in einem dem Rohr (12) zugewandten Bereich des Wärmekopplungselements (20) eine Ausnehmung (21) zum Durchführen eines Befestigungsmittels (31) ausgebildet ist.

10. Temperaturmessvorrichtung (10) nach einem der Ansprüche 1 bis 9, **dadurch gekennzeichnet, dass** das Wärmekopplungselement (20) einen Endaxialabschnitt (38) aufweist, der entlang des Wärmeleitungspfads (47) stromab des ersten und/oder zweiten Temperatursensors (34) positioniert ist.

11. Temperaturmessvorrichtung (10) nach einem der Ansprüche 1 bis 10, **dadurch gekennzeichnet, dass** der erste und/oder zweite Temperatursensor (32, 34) in einer Radialrichtung (18) des Rohrs (12) montierbar sind.

12. Temperaturmessvorrichtung (10) nach einem der Ansprüche 1 bis 10, **dadurch gekennzeichnet, dass** der erste und/oder zweite Temperatursensor (10) in einer Axialrichtung (19) des Rohrs (12) montierbar sind.

13. Temperaturmesssystem (50), umfassend eine Temperaturmessvorrichtung (10), die mit einer Auswertungseinheit (40) gekoppelt ist, **dadurch gekennzeichnet, dass** die Temperaturmessvorrichtung (10) nach einem der Ansprüche 1 bis 12 ausgebildet ist.

14. Computerprogrammprodukt (60) zum Simulieren eines Betriebsverhaltens einer Temperaturmessvorrichtung (10), die auf einem Rohr (12) montiert ist um eine Temperatur (17) eines darin befindlichen Mediums (14) zu messen, **dadurch gekennzeichnet, dass** die Temperaturmessvorrichtung (10) nach einem der Ansprüche 1 bis 12 ausgebildet ist und das Computerprogrammprodukt (60) als Digitaler Zwilling der Temperaturmessvorrichtung (10) ausgebildet ist.

15. Computerprogrammprodukt (60) nach Anspruch 14, **dadurch gekennzeichnet, dass** das Computerprogrammprodukt (60) dazu ausgebildet ist, Temperaturmesswerte von Temperatursensoren (32, 34) der Temperaturmessvorrichtung (10) auf Plausibilität zu prüfen.

## Claims

1. Temperature measuring device (10) for non-invasively measuring a temperature (17) of a medium (14) in a pipe (12), comprising a first temperature sensor (32), a sensor holder (30) and a heat coupling element (20) embodied to produce a heat conduction path (47) from a wall (16) of the pipe (12) to a first temperature sensor (32), which is embodied to provide a first measured temperature value (41), **characterised in that** the heat coupling element (20) has an arcuate profile (29) at least sectionally for adjusting the heat conduction path (47) for the purpose of axially reversing the heat conduction path (47), wherein the axial reversal relates to an axial direction (19) which is defined by a direction in which the pipe (12) extends.

2. Temperature measuring device (10) according to claim 1, **characterised in that** the heat coupling element (20) is embodied in a layered design with components composed of different materials for adjusting the heat conduction path (47).

3. Temperature measuring device (10) according to claim 1 or **2, characterised in that** the heat coupling element (20) has a C-shaped profile, an S-shaped profile, a Z-shaped profile or a meander profile.

4. Temperature measuring device (10) according to one of claims 1 to 3, **characterised in that** the temperature measuring device (10) has a second temperature sensor (34).

5. Temperature measuring device (10) according to claim 4, **characterised in that** the first temperature sensor (32) is arranged in a first axial section (22) of the heat coupling element (20) in order to acquire the first measured temperature value (41) and the second temperature sensor (34) is arranged in a second axial section (24) of the heat coupling element (20) in order to acquire a second measured temperature value (43).

6. Temperature measuring device (10) according to one of claims 1 to 5, **characterised in that** the heat coupling element (20) is at least partially made of a material which has a temperature-related thermal conductivity gradient of up to 0.025 (W/(m*K))/°C in terms of amount.

7. Temperature measuring device (10) according to claim 6, **characterised in that** the material is stainless steel.

8. Temperature measuring device (10) according to one of claims 1 to 7, **characterised in that** a side (28) of the heat coupling element (20) facing the pipe (12) is embodied as a dovetail.

9. Temperature measuring device (10) according to one of claims 1 to 8, **characterised in that** a recess (21) for the passage of a fastening means (31) is embodied in a region of the heat coupling element (20) facing the pipe (12).

10. Temperature measuring device (10) according to one of claims 1 to 9, **characterised in that** the heat coupling element (20) has an end axial section (38) positioned along the heat conduction path (47) downstream of the first and/or second temperature sensor (34).

11. Temperature measuring device (10) according to one of claims 1 to 10, **characterised in that** the first and/or second temperature sensor (32, 34) can be installed in a radial direction (18) of the pipe (12).

12. Temperature measuring device (10) according to one of claims 1 to 10, **characterised in that** the first and/or second temperature sensor (10) can be installed in an axial direction (19) of the pipe (12).

13. Temperature measuring system (50), comprising a temperature measuring device (10) which is coupled to an evaluation unit (40), **characterised in that** the temperature measuring device (10) is embodied according to one of claims 1 to 12.

14. Computer program product (60) for simulating the operating behaviour of a temperature measuring device (10) installed on a pipe (12) for measuring a temperature (17) of a medium (14) located therein, **characterised in that** the temperature measuring device (10) is embodied according to one of claims 1 to 12 and the computer program product (60) is embodied as a digital twin of the temperature measuring device (10).

15. Computer program product (60) according to claim 14, **characterised in that** the computer program product (60) is embodied to check the plausibility of the temperature measured values of temperature sensors (32, 34) of the temperature measuring device (10).

## Revendications

1. Dispositif (10) de mesure de la température pour la mesure non invasive de la température (17) d'un fluide (14) dans un tuyau (12), comprenant une première sonde (32) de température, un porte-sonde (30) et un élément (20) de couplage de la chaleur, qui est constitué pour la production d'un chemin (47) de conduction de la chaleur d'une paroi (16) du tuyau (12) à la première sonde (32) de température, laquelle est constituée pour donner une première valeur (41) de la température, **caractérisé en ce que** l'élément (20) de couplage de la chaleur a, pour l'établissement du chemin (47) de conduction de la chaleur, par rapport à un retour axial du chemin (47) de conduction de la chaleur, au moins par endroits, un profil (29) en forme d'arc, dans lequel le retour axial se rapporte à une direction (19) axiale, qui est définie par une direction, qui s'étend dans le tuyau (12).

2. Dispositif (10) de mesure de la température suivant la revendication 1, **caractérisé en ce que** l'élément (20) de couplage de la chaleur est constitué pour l'établissement du chemin (47) de conduction de la chaleur en mode de construction stratifié en ayant des composants en des matériaux différents.

3. Dispositif (10) de mesure de la température suivant la revendication 1 ou 2, **caractérisé en ce que** l'élément (20) de couplage de la chaleur a un profil en forme de C, un profil en forme de S, un profil en forme de Z ou un profil sinueux.

4. Dispositif (10) de mesure de la température suivant l'une des revendications 1 à 3, **caractérisé en ce que** le dispositif (10) de mesure de la chaleur a une deuxième sonde (34) de température.

5. Dispositif (10) de mesure de la température suivant la revendication 4, **caractérisé en ce que** la première sonde (32) de température est disposée pour un relevé de la première valeur (41) de mesure de la température dans un premier tronçon (22) axial de l'élément (20) de couplage de la chaleur et la deuxième sonde (34) de température pour un relevé d'une deuxième valeur (43) de mesure de la température dans un deuxième tronçon (24) axial de l'élément (20) de couplage de la chaleur.

6. Dispositif (10) de mesure de la température suivant l'une des revendications 1 à 5, **caractérisé en ce que** l'élément (20) de couplage de la chaleur est au moins en partie en un matériau, qui a en valeur absolue un gradient de conductibilité de la chaleur rapporté à la température allant jusqu'à 0,025 (W/(m*K)) /°C.

7. Dispositif (10) de mesure de la température suivant la revendication 6, **caractérisé en ce que** le matériau est un acier fin.

8. Dispositif (10) de mesure de la température suivant l'une des revendications 1 à 7, **caractérisé en ce qu'**un côté (28) tourné vers le tuyau (12) de l'élément (20) de couplage de la chaleur est constitué sous la forme d'une queue-d'aronde.

9. Dispositif (10) de mesure de la température suivant l'une des revendications 1 à 8, **caractérisé en ce que** dans une partie, tournée vers le tuyau (12), de l'élément (20) de couplage de la chaleur est constitué un évidement (21) pour le passage d'un moyen (31) de fixation.

10. Dispositif (10) de mesure de la température suivant l'une des revendications 1 à 9, caractérisé en que l'élément (20) de couplage de la chaleur a un tronçon (38) axial d'extrémité, qui est positionné, suivant le chemin (47) de conduction de la chaleur, en aval de la première et/ou de la deuxième sondes (34) de température.

11. Dispositif (10) de mesure de la température suivant l'une des revendications 1 à 10, caractérisé en que la première et/ou la deuxième sondes (32, 34) de température peuvent être montées dans une direction (18) radiale du tuyau (12).

12. Dispositif (10) de mesure de la température suivant l'une des revendications 1 à 10, caractérisé en que la première et/ou la deuxième sondes (10) de température peuvent être montées dans une direction (19) axiale du tuyau (12).

13. Système (50) de mesure de la température, comprenant un dispositif (10) de mesure de la température, qui est accouplé à une unité (40) d'évaluation, **caractérisé en ce que** le dispositif (10) de mesure de la température est constitué suivant l'une des revendications 1 à 12.

14. Produit (60) de programme d'ordinateur pour la simulation d'un comportement de fonctionnement d'un dispositif (10) de mesure de la température, qui est monté sur un tuyau (12), afin de mesurer une température (17) d'un fluide (14) s'y trouvant, **caractérisé en ce que** le dispositif (10) de mesure de la température est constitué suivant l'une des revendications 1 à 12, et le produit (60) de programme d'ordinateur est constitué sous la forme d'un double numérique du dispositif (10) de mesure de la température.

15. Produit (60) de programme d'ordinateur suivant la revendication 14, **caractérisé en ce que** le produit (60) de programme d'ordinateur est constitué pour contrôler la vraisemblance des valeurs de mesure de température de sondes (32, 34) de température du dispositif (10) de mesure de la température.
